# EUROPÄISCHE PATENTSCHRIFT

(11) **EP 0 763 453 B1**
(45) Veröffentlichungstag und Bekanntmachung des Hinweises auf die Patenterteilung: **20.10.1999**
(21) Anmeldenummer: 96113448.3
(22) Anmeldetag: 22.08.1996
(51) Int. Cl.: B60T 8/00, G01P 3/46

(54) **Verfahren zur Filterung eines Geschwindigkeitssignals für Kraftfahrzeuganwendungen**
Method for filtering of velocity signals for usage with vehicles
Procédé pour le filtrage d'un signal de vélocité pour l'usage dans des véhicules

(30) Priorität: 18.09.1995 DE 19534566
(43) Veröffentlichungstag der Anmeldung: 19.03.1997
(73) Patentinhaber: Hella KG Hueck & Co., 59552 Lippstadt (DE)
(72) Erfinder: Kasprzok, Ralf, 59558 Lippstadt (DE); Neumann, Andreas, 59555 Lippstadt (DE)

(56) Entgegenhaltungen:
- EP-A- 0 342 789
- EP-A- 0 348 072
- EP-A- 0 469 345
- DE-A- 3 806 213
- DE-A- 3 905 045
- DE-A- 4 426 960

## Beschreibung

Die Erfindung betrifft ein Verfahren zur Filterung eines Geschwindigkeitssignals für Kraftfahrzeuganwendungen, wobei das Geschwindigkeitssignal für den zu filternden Geschwindigkeitsbereich als Puls-Pausen-Signal vorliegt und die Filterung unter Verwendung von mindestens einem Tiefpaß mit unterschiedlichen Grenzfrequenzen erfolgt.

Seit der Einführung der Anti-Blockier-Systeme steht in Kraftfahrzeugen ein Geschwindigkeitssignal zur Verfügung, das eine höhere Genauigkeit aufweist als das bisher genutzte Tachosignal. Für den im Kraftfahrzeug zu detektierenden Geschwindigkeitsbereich von 0 bis 250 km/h besteht dieses ABS-Signal aus einem digitalen Puls-Pausen-Signal. Die Periodenzeit der Pulsabstände entspricht dabei dem Geschwindigkeitssignal. Für den angegebenen Geschwindigkeitsbereich liegen die Periodenzeiten typischerweise zwischen 3 Millisekunden und 300 Mikrosekunden. Ein solches Geschwindigkeitssignal erlaubt die Nutzung für schnellere Regelvorgänge bei Kraftfahrzeuganwendungen. Obwohl das ABS-Signal ein elektronisch aufgearbeitetes Signal ist, weist dieses Störanteile auf, die zum Beispiel durch ein Spiel im Radlager oder eine Unwucht im Rad bedingt sein können. Diese Störanteile des ABS-Signals äußern sich in kurzzeitigen, nicht durch Geschwindigkeitsänderungen bedingte Änderungen der Periodenzeiten des ABS-Signals. Diese Störanteile können bei schnellen Regelvorgängen für Kraftfahrzeuganwendungen zu falschen Regeleingriffen führen.

Verfahren zur Störbefreiung von Geschwindigkeitssignalen sind bekannt. So ist aus der deutschen Patentschrift DE 28 54 929 C2 eine Schaltungsanordnung zur Unterdrückung von Störsignalen in einem Anti-Blockier-System bekannt, bei dem eine Filterung des vorliegenden Geschwindigkeitssignals durchgeführt wird. Der als Filter eingesetzte Tiefpaß weist dabei eine steuerbare Grenzfrequenz auf.

Aus der Deutschen Patentanmeldung DE 39 05 045 A1 ist eine Schaltungsanordnung für eine Bremsanlage bekannt, die einen Schaltkreis zur Bildung einer Fahrzeugreferenzgeschwindigkeit aufweist. Das Geschwindigkeitssignal für den zu filternden Geschwindigkeitsbereich liegt dabei als Puls-Pausen-Signal vor. Die Filterung erfolgt unter Verwendung variabler Filterzeitkonstanten.

Auch aus der deutschen Offenlegungsschrift DE 31 30 019 A1 ist ein Verfahren zur Filterung eines Geschwindigkeitssignals für Kraftfahrzeuganwendungen bekannt. Das Geschwindigkeitssignal liegt dabei für den zu filternden Geschwindigkeitsbereich als Puls-Pausen-Signal vor. Für die Störsignaleliminierung weist die Filterung drei unterschiedlich schaltbare Filterstufen auf.

Bei dem vorbekannten Stand der Technik erweist sich als nachteilig, daß die Zu-bzw. Umschaltung der Filter in ein geschlossenes Regelverfahren einbezogen ist, so daß erst nach Detektierung eines Störsignals eine entsprechende Filtercharakteristik gewählt wird. Um auch bei hohen Geschwindigkeiten des Kraftfahrzeuges bzw. damit verbundenen kurzen Periodenzeiten eine für anschließende Regelvorgänge ausreichende Störsignalbefreiung des Nutzsignals zu erhalten, sind aufwendige Regelschaltungen notwendig.

Der Erfindung liegt die Aufgabe zugrunde, eine Verfahren zu schaffen, das auf einfache und kostengünstige Weise aus einem vorliegenden Geschwindigkeitssignal ein Referenzsignal erzeugt, das in jedem Geschwindigkeitsbereich ein möglichst gutes Nutz-/Störsignal-Verhältnis aufweist.

Die Aufgabe wird durch die Merkmale des Anspruchs 1 gelöst.

Dadurch, daß der zu filternde Geschwindigkeitsbereich in mindestens zwei Geschwindigkeitsteilbereiche unterteilt wird, und daß in jedem Geschwindigkeitsteilbereich eine andere Grenzfrequenz für die Filterung wirksam geschaltet wird, ergibt sich der Vorteil, daß über den gesamten Geschwindigkeitsbereich auf einfache und kostengünstige Weise ein Referenzsignal der Geschwindigkeit erzeugt werden kann, das ohne Störsignalbeeinflussung zu schnellen Regelvorgängen herangezogen werden kann. In diesem Zusammenhang erweist sich als besonders vorteilhaft, daß die Grenzfrequenz für einen niedrigeren Geschwindigkeitsteilbereich höher ist als für einen höheren Geschwindigkeitsteilbereich, weil somit ein Referenzsignal für die Geschwindigkeit erzeugt werden kann, bei dem weder Störsignale im niedrigeren Geschwindigkeitsbereich noch im höheren Geschwindigkeitsbereich zu Fehlern bei einer anschließenden Regelung führen und zudem gewährleistet wird, daß eine schnelle Regelung der Kraftfahrzeuganwendung sowohl im hohen Geschwindigkeitsbereich als auch im niedrigen Geschwindigkeitsbereich möglich ist. Bei der Anwendung nur einer Grenzfrequenz eines Tiefpasses, der bestmöglich Fehler im hohen Geschwindigkeitsbereich ausgleicht, müßte man ansonsten in Kauf nehmen, daß das Regelsystem im unteren Geschwindigkeitsbereich zu träge auf Änderungen des Geschwindigkeitssignals reagiert.

Weiterhin erweist sich als vorteilhaft, daß die Umschaltung der Grenzfrequenz bei dem Überschreiten des Geschwindigkeitsgrenzwertes zwischen dem niedrigeren Geschwindigkeitsteilbereich und dem höheren Geschwindigkeitsteilbereich erfolgt, weil somit für jeden Geschwindigkeitsteilbereich die Einschaltung der bestmöglich angepaßten Grenzfrequenz für den Tiefpaß gewährleistet wird.

Dadurch, daß die Umschaltung auf die höhere Grenzfrequenz bei dem Wechsel in den niedrigeren Geschwindigkeitsteilbereich erst dann erfolgt, wenn der Geschwindigkeitsgrenzwert um einen vorgegebenen Betrag unterschritten wurde, ergibt sich der Vorteil, daß bei einem häufigen Überschreiten des Geschwindigkeitsgrenzwertes zwischen zwei Geschwindigkeitsteilbereichen kein unmittelbares Hin- und Herschalten erfolgt und somit ein Oszillieren mit möglichen negativen Auswirkungen auf ein von dem Geschwindigkeitssignal abhängiges angeschlossenes Regelverfahren vermieden wird.

Die gleichen Vorteile ergeben sich bei Anwendung der Merkmale des Anspruchs 4.

Als besonders vorteilhaft erweist sich die Verwendung des erfindungsgemäßen Verfahrens bei der Erzeugung eines Geschwindigkeitsreferenzsignals für die automatische, dynamische Regelung der Leuchtweite eines Kraftfahrzeuges. Bei einer automatischen, dynamischen Regelung der Leuchtweite eines Kraftfahrzeuges wird ein Geschwindigkeitsreferenzsignal benötigt, das in jedem Geschwindigkeitsbereich für eine schnelle Regelung der Leuchtweite ein bestmögliches Nutz-/Störsignal-Verhältnis aufweist. Erst bei Vorliegen eines solchen Geschwindigkeitsreferenzsignals ist es möglich, sowohl bei niedrigsten Geschwindigkeiten als auch bei höchsten Geschwindigkeiten, die durch Beschleunigungen auftretenden Neigungsänderungen der Kraftfahrzeugkarosserie unmittelbar in ausgleichende Änderungen der Leuchtweite der Scheinwerfer des Kraftfahrzeuges umzusetzen, ohne daß die das Geschwindigkeitssignal überlagernden Störsignale zur Ermittlung falscher Beschleunigungswerte und somit falscher Einstellwerte für die Leuchtweite der Scheinwerfer führen.

Im folgenden wird ein Ausführungsbeispiel des Erfindungsgegenstandes erläutert.

Wie aus der europäischen Patentschrift EP 0 355 539 B1 sowie aus der deutschen Offenlegungsschrift DE 42 02 908 A1 bekannt, ist es für eine automatische, dynamische Regelung der Leuchtweite eines Kraftfahrzeuges notwendig, dieser Regelung ein Geschwindigkeitssignal zur Verfügung zu stellen. Aufgrund dieses Geschwindigkeitssignals wird die Beschleunigung des Kraftfahrzeuges ermittelt, die das Regelverfahren zur Regelung der Leuchtweite der Scheinwerfer beeinflußt. Zur exakten Bestimmung der Neigung des Kraftfahrzeuges werden dabei Fahrzeugniveausensoren verwendet.

Wie schon in der Beschreibungseinleitung ausgeführt, steht für solche Regelungszwecke seit Einführung der Anti-Blockier-Systeme ein sogenanntes ABS-Signal als Geschwindigkeitssignal zur Verfügung, das eine höhere Auflösung bietet, als das bisher verwendete Tachosignal. Bedingt durch zum Beispiel mechanische Unzulänglichkeiten am Rad und der Aufhängung des Kraftfahrzeuges kann dieses ABS-Signal, das ein Puls-Pausen-Signal ist, von Störsignalen überlagert sein. Diese machen sich in einer nicht durch eine Geschwindigkeitsänderung bedingte Änderung der Periodenzeit zwischen zwei auszuwertenden Flanken des Puls-Pausen-Signals bemerkbar. Das Schwingen der Pulsflanken bezeichnet man als "Jitter". Bei dem zu detektierenden Geschwindigkeitsbereich zwischen 0 und 250 km/h entsprechen Periodenzeiten von 3 Millisekunden bis 300 Mikrosekunden kann der maximale Jitter einem Geschwindigkeitsfehlwert von bis zu 30 km/h entsprechen. Störsignale dieser Größenordnung führen bei der Ableitung des Geschwindigkeitssignals zu Beschleunigungssignalen, die die Regelung der Leuchtweite der Scheinwerfer negativ beeinflußt und sogar zur Abschaltung des Regelsystems führen kann. Da die Störsignale über den gesamten Geschwindigkeitsbereich auftreten aufgrund der variierenden Periodenzeiten des Geschwindigkeitssignals, die Auswirkungen auf zu erzeugende Beschleunigungssignale jedoch sehr unterschiedlich sein können, ist somit eine differenzierte Filterung des Geschwindigkeitssignals unter Verwendung von mindestens einem Tiefpaß mit unterschiedlichen Grenzfrequenzen vorgesehen. Dabei wird der zu filternde Geschwindigkeitsbereich in mindestens zwei Geschwindigkeitsteilbereiche unterteilt.

In jedem dieser Geschwindigkeitsteilbereiche wird eine andere Grenzfrequenz für die Filterung wirksam geschaltet, damit in einem niedrigeren Geschwindigkeitsteilbereich auch kurzzeitige Beschleunigung gemessen und genutzt werden können, ohne daß die auftretenden Störsignale zu einer negativen Beeinflussung führen, wird die Grenzfrequenz für einen niedrigeren Geschwindigkeitsbereich höher angesetzt als für einen höheren Geschwindigkeitsteilbereich.

Liegt der zu detektierende Geschwindigkeitsbereich zwischen 0 und 250 km/h, so kann der niedrigere Geschwindigkeitsteilbereich zum Beispiel Geschwindigkeiten zwischen 0 und 110 km/h abdecken und der höhere Geschwindigkeitsteilbereich Geschwindigkeiten zwischen 110 und 250 km/h abdecken. Bei der Verwendung eines Tiefpasses zweiter Ordnung hat es sich dabei als vorteilhaft erwiesen, die Grenzfrequenz für den niedrigeren Geschwindigkeitsbereich auf 1,75 Hz festzusetzen und die Grenzfrequenz für den höheren Geschwindigkeitsteilbereich auf 1,25 Hz festzusetzen. Je nach verwendetem Filter und der gewählten Ordnung des Filters können diese Werte sich von Fall zu Fall unterscheiden.

Ebenfalls können die angegebenen Geschwindigkeitsteilbereiche durch einen andersartigen Geschwindigkeitsgrenzwert voneinander getrennt sein.

Es hat sich als vorteilhaft erwiesen, bei Überschreiten des Geschwindigkeitswertes von hier beispielhaft 110 km/h von dem niedrigeren Geschwindigkeitsteilbereich in den höheren Geschwindigkeitsteilbereich die Grenzfrequenz oder auf einen anderen Tiefpaß mit der niedrigeren Grenzfrequenz umzuschalten. Bei Überschreiten des Geschwindigkeitsgrenzwertes von dem höheren Geschwindigkeitsteilbereich in den niedrigen Geschwindigkeitsteilbereich hat es sich dagegen als vorteilhaft erwiesen, die Umschaltung auf die höhere Grenzfrequenz erst dann vorzunehmen, wenn der Geschwindigkeitsgrenzwert um einen vorgegebenen Betrag unterschritten wurde.

Entsprechend dem maximal wirksamen Fehler des Geschwindigkeitssignals kann die Umschaltung bzw. Einschaltung eines Tiefpasses mit einer höheren Grenzfrequenz erst dann erfolgen, wenn bei dem hier gezeigten Beispiel der Geschwindigkeitsgrenzwert von 110 km/h um 20 bis 30 km/h unterschritten wurde.

Je nach Kraftfahrzeugtyp, Anwendung und Verwendung des aus dem Geschwindigkeitssignal hergeleiteten Beschleunigungssignals kann es auch sinnvoll sein, daß die Umschaltung auf die niedrigere Grundfrequenz bei dem Wechsel in den höheren Geschwindigkeitsteilbereich erst dann erfolgt, wenn der Geschwindigkeitsgrenzwert um einen vorgegebenen Betrag überschritten wurde.

Je nach benötigter Störfreiheit des Geschwindigkeitssignals kann es notwendig sein, den zu detektierenden Geschwindigkeitsbereich in mehr als zwei Geschwindigkeitsteilbereiche mit zugehörigen Grenzfrequenzen für die Filterung zu unterteilen. Durch die Wahl einer jeweils höheren Grenzfrequenz für den jeweils niedrigeren Geschwindigkeitsteilbereich wird dabei sichergestellt, daß kurzzeitige Beschleunigungsänderungen des Kraftfahrzeuges in dem niedrigeren Geschwindigkeitsbereich für die Anwendung bei Regelvorgängen sicher ausgewertet werden können und Störsignale in den jeweils höheren Geschwindigkeitsteilbereichen keine nicht durch reale Geschwindigkeitsänderungen des Kraftfahrzeugs bedingten Beschleunigungsänderungen vortäuschen und somit von dem Geschwindigkeitssignal abhängige Regelvorgänge verfälschen.

## Patentansprüche

1. Verfahren zur Filterung eines Geschwindigkeitssignals für Kraftfahrzeuganwendungen, wobei das Geschwindigkeitssignal für den zu filternden Geschwindigkeitsbereich als Puls-Pausen-Signal vorliegt und die Filterung unter Verwendung von mindestens einem Tiefpaß mit unterschiedlichen Grenzfrequenzen erfolgt, dadurch gekennzeichnet, daß der zu filternde Geschwindigkeitsbereich in mindestens zwei Geschwindigkeitsteilbereiche unterteilt ist, daß in jedem Geschwindigkeitsteilbereich eine andere Grenzfrequenz für die Filterung wirksam geschaltet wird und daß die Grenzfrequenz für einen niedrigeren Geschwindigkeitsteilbereich höher ist als für einen höheren Geschwindigkeitsteilbereich.

2. Verfahren nach Anspruch 1, dadurch gekennzeichnet, daß die Umschaltung der Grenzfrequenz bei dem Überschreiten des Geschwindigkeitsgrenzwertes zwischen dem niedrigeren Geschwindigkeitsteilbereich und dem höheren Geschwindigkeitsteilbereich erfolgt.

3. Verfahren nach Anspruch 2, dadurch gekennzeichnet, daß die Umschaltung auf die höhere Grenzfrequenz bei dem Wechsel in den niedrigeren Geschwindigkeitsteilbereich erst dann erfolgt, wenn der Geschwindigkeitsgrenzwert um einen vorgegebenen Betrag unterschritten wurde.

4. Verfahren nach Anspruch 2, dadurch gekennzeichnet, daß die Umschaltung auf die niedrigere Grenzfrequenz bei dem Wechsel in den höheren Geschwindigkeitsteilbereich erst dann erfolgt, wenn der Geschwindigkeitsgrenzwert um einen vorgegebenen Betrag überschritten wurde.

5. Leuchtweitenregelung für Kraftfahrzeuge, gekennzeichnet durch die Erzeugung des Geschwindigkeitssignals nach mindestens einem der Ansprüche 1 bis 4.

## Claims

1. Method of filtering a speed signal for application in motor vehicles wherein the speed signal for the speed range to be filtered is present in the form of a pulse space signal and the filtering is carried out by use of at least one low pass filter having different cut off frequencies, characterised in that the speed range to be filtered is sub divided into at least two speed sub ranges, that in each speed sub range a different cut off frequency is switched to be effective for the filtering, and that the cut off frequency for a lower speed sub range is higher than for a higher speed sub range.

2. Method according to claim 1, characterised in that switching over of the cut off frequency is carried out upon the speed cut off value between the lower speed sub range and the higher speed sub range being crossed.

3. Method according to claim 2, characterised in that the switching over to the higher cut off frequency upon the change into the lower speed sub range is carried out only when the speed cut off value has been underachieved by a pre-determined amount.

4. Method according to claim 2, characterised in that the switching over to the lower cut off frequency upon the change into the higher speed sub range is carried out only when the speed cut off value has been exceeded by a pre-determined amount.

5. Light beam levelling control for motor vehicles, characterised by the speed signal being produced according to at least one of claims 1 to 4.

## Revendications

1. Procédé pour filtrer un signal de vitesse pour des applications à des véhicules automobiles, selon lequel le signal de vitesse est présent, pour la gamme de vitesses devant être filtrée, en tant que signal impulsion - pause et le filtrage est exécuté moyennant l'utilisation d'au moins un filtre passe-bas possédant des fréquences limites différentes, caractérisé en ce que la gamme de vitesses devant être filtrée est subdivisée en au moins deux gammes partielles de vitesses, qu'une autre fréquence limite pour le filtrage est activée dans chaque gamme partielle de vitesses et que la fréquence limite pour une gamme partielle de vitesses plus faibles est plus élevée que pour une gamme partielle de vitesses plus élevées.

2. Procédé selon la revendication 1, caractérisé en ce que la commutation de la fréquence limite s'effectue, lors du dépassement de la valeur limite de vitesse, entre la gamme partielle de vitesses plus faibles et la gamme partielle de vitesses plus élevées.

3. Procédé selon la revendication 2, caractérisé en ce que la commutation sur la fréquence limite plus élevée s'effectue lors de la commutation faisant passer à la gamme partielle de vitesses plus faibles uniquement lorsque la valeur limite de vitesse a été dépassée par le bas, d'une valeur absolue prédéterminée.

4. Procédé selon la revendication 2, caractérisé en ce que la commutation sur la fréquence limite plus faible s'effectue lors de la commutation faisant passer la gamme partielle de vitesses plus élevées, uniquement lorsque la valeur limite de vitesse a été dépassée par le haut, d'une valeur absolue prédéterminée.

5. Régulation de la portée de phares pour véhicules automobiles, caractérisée par la production du signal de vitesse selon au moins l'une des revendications 1 à 4.
